# EUROPÄISCHE PATENTSCHRIFT

(11) **EP 0 956 950 B1**
(45) Veröffentlichungstag und Bekanntmachung des Hinweises auf die Patenterteilung: **02.10.2002**
(21) Anmeldenummer: 99109654.6
(22) Anmeldetag: 15.05.1999
(51) Int. Cl.: B41F 13/08, F16F 15/00

(54) **Verfahren und Vorrichtung zum aktiven Unterdrücken von Kontaktschwingungen an Walzenanordnungen**
Method and device for active suppression of contact vibrations in roll arrangements
Procédé et dispositif pour supprimer activement les vibrations de contact dans un arrangement de rouleaux

(30) Priorität: 15.05.1998 DE 19821854
(43) Veröffentlichungstag der Anmeldung: 17.11.1999
(73) Patentinhaber: Eras Entwicklung und Realisation adaptiver Systeme GmbH, 37085 Göttingen (DE)
(72) Erfinder: Wimmel, Roger, 37124 Rosdorf (DE); Gnauert, Uwe Dr., 37083 Göttingen (DE); Grabow, Frank, 34119 Kassel (DE); Fehren, Heinrich Dr., 34127 Kassel (DE); Siebald, Hubertus, 37124 Rosdorf (DE); Wenzel, Michael Dr., 37120 Bovenden (DE)
(74) Vertreter: Patentanwälte Rehberg + Hüppe

(56) Entgegenhaltungen:
- EP-A- 0 425 352
- WO-A-97/03832

## Beschreibung

Die Erfindung bezieht sich auf ein Verfahren und eine Vorrichtung zum aktiven Unterdrücken von Kontaktschwingungen an Walzenanordnungen, insbesondere an Papierstreichapparaten, mit zwei parallel ausgerichteten, direkt oder indirekt aneinander anliegenden Walzen, von denen insbesondere eine ohne aktives Unterdrücken der Kontaktschwingungen eine zunehmende periodische Verformung ihrer Oberfläche zeigt, wobei die Kräfte auf mindestens eine, die Beschleunigungen mindestens einer und/oder die Bewegungen mindestens einer der beiden Walzen gemessen werden und wobei Ausgleichskräfte in Abhängigkeit von den gemessenen Kräften, Beschleunigungen und/oder Bewegungen aufgebracht werden.

Bei verschiedensten Walzenanordnungen, insbesondere bei Papierstreichapparaten, mit zwei parallel ausgerichteten, direkt oder indirekt aneinander anliegenden Walzen treten Kontaktschwingungen auf, die beispielsweise durch Unwuchten oder Unrundheiten einer der beiden Walzen initiiert werden. Insbesondere wenn die Anregung oder eine ihrer Harmonischen in den Bereich einer Resonanz fällt, die sich auf die beiden Walzen auswirkt, nimmt die Amplitude der Kontaktschwingungen schnell störende Ausmaße an; oder es kommt zu einer Rückkopplung der Effekte der Kontaktschwingungen mit ihrer Anregung. Ein solcher Fall ist beispielsweise dann gegeben, wenn eine der beiden Walzen eine elastische, aus einem Elastomerwerkstoff ausgebildete Oberfläche aufweist, die aufgrund der Kontaktschwingungen verformt wird, wobei die verformte Oberfläche ihrerseits die Kontaktschwingungen weiter anregt. Verformungen der Oberfläche zeigen sich aber nicht nur bei Walzen mit elastischen, aus Elastomerwerkstoff ausgebildeten Oberflächen, sondern, wenn auch typischerweise nach längeren Zeiträumen, auch bei harten Walzen. Hier werden auf den Kontaktschwingungen beruhende dauerhafte Verformungen beobachtet, die als Rattermarken bezeichnet werden. Auch durch die Rattermarken vergrößern sich in der Folge die Amplituden der Kontaktschwingungen, bis die Walzen ausgetauscht werden müssen.

Ein Verfahren und eine Vorrichtung mit den eingangs beschriebenen Merkmalen sind aus der veröffentlichten PCT/EP96/03042 bekannt. Diese Anmeldung betrifft konkret die Verminderung der Biegeschwingungen von rotierenden Walzen, insbesondere bei Tiefdruck-Maschinen, in denen störende Schwingungen der Presseur-Walzen auftretenden können. Zur Verminderung der Biegeschwingungen wird vorgeschlagen, die durch Unwuchten und/oder zeitlich veränderliche, radial einwirkende Kräfte erzeugten Schwingungen und deren charakterisierende Parameter in einem breiten Frequenzband zu messen und diese Meßwerte zur Regelung und Ansteuerung von Aktuatoren zu verwenden, die die Schwingungen aktiv unterdrücken. Dabei soll die Regelung vorzugsweise selbstoptimierend sein und bei sich verändernden Eigenfrequenzen die dafür geeigneten Ansteuerungssignale für die Aktuatoren berechnen. Bei den Aktuatoren selbst soll es sich um piezo-elektrische oder magneto-striktive oder hydraulische Einheiten handeln. Es fehlt aber an einer Offenbarung, wie ein entsprechendes Verfahren konkret durchgeführt werden soll bzw. wie eine entsprechende Vorrichtung konkret aufgebaut werden kann, damit die Verminderung der Biegeschwingungen tatsächlich erreicht wird.

Der Erfindung liegt demgemäß die Aufgabe zugrunde, ein konkretes Verfahren und eine konkrete Vorrichtung der eingangs beschriebenen Art aufzuzeigen, mit denen das aktive Unterdrücken von Kontaktschwingungen an Walzenanordnungen tatsächlich möglich ist.

Bei dem Verfahren der eingangs beschriebenen Art wird die Aufgabe erfindungsgemäß dadurch gelöst, daß die Drehfrequenz der Walze mit der sich potentiell insbesondere verformenden Oberfläche bestimmt wird und daß die Ausgleichskräfte mit der Drehfrequenz und/oder mindestens einem aus der Drehfrequenz generierten ganzzahligen Vielfachen der Drehfrequenz zwischen den beiden Walzen aufgebracht werden. Bei dem neuen Verfahren ist eine Konzentration auf die Anregungen von Kontaktschwingungen gegeben, die von der Drehfrequenz der die sich insbesondere verformende Oberfläche aufweisenden Walze abhängen. Nur Anregungen mit dieser Drehfrequenz oder einem ganzzahligen Vielfachen der Drehfrequenz können zu den periodischen Verformungen der Oberfläche dieser Walze führen. Entsprechend können diese periodischen Verformungen der Oberfläche verhindert werden, wenn mit eben diesen Frequenzen aktiv in die Walzenanordnung eingegriffen wird. Gleichzeitig ist mit der Konzentration auf diese Frequenzen eine ganz konkrete Vorgehensweise festgelegt und eine grundsätzliche Beschränkung für den Aufwand des Verfahrens gegeben. Zunächst ist die Drehfrequenz der Walze mit der sich potentiell insbesondere verformenden Oberfläche zu bestimmen. Dies kann direkt durch einen Drehzahlgeber an der Walze erfolgen. Es ist aber auch möglich, beispielsweise die Drehzahl eines die Walze antreibenden Motors zu registrieren und hieraus die Drehfrequenz der Walze zu bestimmen. Aus der Drehfrequenz werden typischerweise einige wenige ganzzahlige Vielfache der Drehfrequenz ermittelt und mit eben diesen Frequenzen die Aktuatoren angesteuert. Das Anregungssignal ist dabei für jede dieser Frequenzen typischerweise eine reine Sinuswelle, deren Amplitude und Phase in Abhängigkeit von den an einer Walze registrierten Kräften, Beschleunigungen und/oder Bewegungen festgelegt wird. Dabei kann sich der Regelalgorithmus, der die Kräfte, Beschleunigungen bzw. Bewegungen als Kontrollsignal verwendet, nach einem Try-and-error-Verfahren schrittweise an die Walzenanordnung adaptieren, d. h. selbstätig optimieren.

Vorzugsweise werden in einer der Walze mit der sich potentiell insbesondere verformenden Oberfläche abgekehrten Richtung die Kräfte auf, die Beschleunigungen der und/oder die Bewegungen der anderen Walze gemessen. Das heißt, die Kräfte, Beschleunigungen bzw. Bewegungen werden an der Walze festgestellt, deren Oberfläche sich nicht oder zumindest weniger verformt als die Oberfläche der anderen Walze. Dies entspricht der Aufzeichnung der Reaktionen auf die jeweiligen Anregungen der Kontaktschwingungen.

Diese Reaktionen sind häufig besonders groß in der Walzenmitte der betrachteten Walze, so daß dort auftretende Beschleunigungen und/oder Bewegungen vorzugsweise gemessen werden. Kräfte sind an dieser Stelle in aller Regel nicht ohne weiteres abgreifbar.

Bei der Betrachtung der Kräfte, Beschleunigungen bzw. Bewegungen an der jeweiligen Walze für die Festlegung der Ausgleichskräfte findet vorzugsweise eine Beschränkung auf ein Frequenzband um die Frequenz der potentiellen periodischen Verformung der Walze mit der sich potentiell insbesondere verformenden Oberfläche statt. Es ist sinnvoll, die Betrachtung der Kräfte, Beschleunigungen bzw. Bewegungen auf die Frequenzen zu konzentrieren, in denen tatsächlich ein Eingriff in die Walzenanordnung mit den Ausgleichskräften erfolgen soll.

Ganz konkret werden die Ausgleichskräfte sinnvollerweise mit ein bis fünf, insbesondere mit ein, drei oder fünf verschiedenen ganzzahligen Vielfachen der Drehfrequenz der Walze mit der sich potentiell verformenden Oberfläche aufgebracht. Dabei liegen die ganzzahligen Vielfachen der Drehfrequenz in einem Frequenzband um die Frequenz der potentiellen periodischen Verformung der Walze mit der sich potentiell insbesondere verformenden Oberfläche. Die interessierenden ganzzahligen Vielfachen der Drehfrequenz zeigen sich in den beobachteten Kräften, Beschleunigungen bzw. Bewegungen in Form von ausgeprägten Peaks. Bei der Erfindung wird die Frequenz dieses Peaks jedoch nicht unmittelbar für die Festlegung der Frequenz der Ausgleichskräfte herangezogen. Die Peaks legen zwar fest, welche ganzzahligen Vielfache der Drehfrequenz für die Ausgleichskräfte verwendet werden. Diese ganzzahligen Vielfache der Drehfrequenz werden aber unmittelbar aus der Drehfrequenz generiert. Die Phase und die Amplitude der Ausgleichskräfte werden dann wiederum aus den gemessenen Kräften, Beschleunigungen bzw. Bewegungen festgelegt. Eine Beschränkung der Ausgleichskräfte auf ein ganzzahliges Vielfaches der Drehfrequenz ist möglich, wenn eine sich auf die Walzenanordnung auswirkenden Resonanz nur mit diesem Vielfachen der Drehfrequenz eine nennenswerte Überdeckung aufweist. Fallen mehrere ganzzahlige Vielfache in den Bereich der Resonanz, sind entsprechend noch die ersten und/oder zweiten Nachbarn der im wesentlichen betroffenen Frequenz zu berücksichtigen.

Die Ausgleichskräfte werden vorzugsweise senkrecht zu dem Anlagebereich der beiden Walzen aufgebracht, d. h. beispielsweise zwischen den endseitigen Lagern der beiden Walzen. An den Lagern kann grundsätzlich auch die Messung der interessierenden Kräfte, Beschleunigungen und/oder Bewegungen für die Festlegung der Ausgleichskräfte erfolgen.

Wenn die potentiell auftretenden Kontaktschwingungen einen asymmetrischen Verlauf bezogen auf die Quermittelebene der Walzenanordnung aufweisen, können die Kräfte auf, die Beschleunigung der und/oder die Bewegung der jeweiligen Walze für die Festlegung der Ausgleichskräfte in mehreren, in Längsrichtung der Walze untereinander beabstandeten Punkten gemessen werden, wobei in Abhängigkeit davon in mehreren in Längsrichtung der Walzen untereinander beabstandeten Bereichen separat festgelegte Ausgleichskräfte aufgebracht werden. Bei symmetrischen Kontaktschwingungen reicht es hingegen aus, die Ausgleichskräfte einheitlich festzulegen, auch wenn sie in unterschiedlichen Bereichen, beispielsweise an beiden endseitigen Lagern, auf die Walzen aufgebracht werden. Dabei kann die Beobachtung der Kräfte, Beschleunigungen und/oder Bewegungen durchaus in einer außermittigen Position erfolgen.

Eine Vorrichtung zur Durchführung des neuen Verfahrens mit einer Walzenanordnungen, die zwei parallel ausgerichtete, direkt oder indirekt aneinander anliegende Walzen aufweist, von denen insbesondere eine ohne aktives Unterdrücken der Kontaktschwingungen eine zunehmende periodische Verformung ihrer Oberfläche zeigt, wobei für die Kräfte auf mindestens eine, die Beschleunigungen mindestens einer und/oder die Bewegungen mindestens einer der beiden Walzen mindestens ein Sensor vorgesehen ist und wobei für das Aufbringen von Ausgleichskräften mindestens ein Aktuator vorgesehen ist, den eine Steuereinrichtung in Abhängigkeit von den gemessenen Kräften, Beschleunigungen und/oder Bewegungen ansteuert, ist erfindungsgemäß dadurch gekennzeichnet, daß für die Walze mit der sich potentiell insbesondere verformenden Oberfläche ein Drehzahlsensor vorgesehen ist, der die Drehfrequenz der Walze mißt, und daß die Steuereinrichtung jeden Aktuator mit der Drehfrequenz und/oder mindestens einem aus der Drehfrequenz generierten ganzzahligen Vielfachen der Drehfrequenz ansteuert.

Vorzugsweise ist ein Sensor für die Beschleunigungen und/oder Bewegungen der jeweiligen Walze über der Oberfläche der Walze, insbesondere in der Walzenmitte, angeordnet, wobei der Sensor ein Abstandssensor, vorzugsweise ein kapazitiver Abstandssensor ist, dem ein Korrektursensor für die Eigenbeschleunigungen bzw. Eigenbewegungen des Sensors zugeordnet ist. Der Korrektursensor für die Eigenbeschleunigung bzw. Eigenbewegung des Sensors ist erforderlich, weil in aller Regel eine Lagerung des Sensors für die Beschleunigung bzw. Bewegung der jeweiligen Walze nicht absolut ruhend angeordnet werden kann, sondern beispielsweise an einem Maschinengerüst gelagert werden muß, das seinerseits schwingt. Wenn die jeweils beobachtete Walze keine einfache Biegeschwingungen aufgrund der Kontaktschwingungen vollführt, sondern in der Walzenmitte einen Schwingungsknoten zeigt, wird der Sensor vorzugsweise im Bereich eines Viertels der Walzenlänge angeordnet. Vorzugsweise wird der Sensor so angeordnet, daß er die Beschleunigungen bzw. Bewegungen der Walzen der durch die beiden Drehachsen definierten Ebene senkrecht zu der Drehachse der beobachteten Walzen registriert. Wenn hierfür keine Anbringungsmöglichkeiten des Sensors gegeben sind, besteht manchmal die Möglichkeit, den Sensor auch senkrecht zu der durch die Drehachsen definierten Ebene anzuordnen, weil in dieser Richtung von den Schwingungen in der Ebene abhängige Schwingungskomponenten beobachtet werden können, beispielsweise bei einer elliptischen Bewegung der beobachteten Walze.

Wenn die Lager der beiden Walzen der Walzenanordnung um eine Schwenkachse auseinanderschwenkbar sind, sind der oder die Aktuatoren vorzugsweise tangential zu der Schwenkachse angeordnet.

Auf welche Vielfachen der Drehfrequenz der Walze mit der sich potentiell verformenden Oberfläche sich die Steuereinrichtung konzentriert, kann fest vorgegeben sein. Es ist aber auch ohne weiteres möglich, daß die Steuereinrichtung bei Betriebsbeginn eine Systemidentifikation durchführt und dabei die für die Walzenanordnung relevanten Resonanzen ermittelt und daraufhin die Vielfachen der Drehfrequenz in Abhängigkeit von der Drehfrequenz selbst festlegt.

Die Erfindung wird im folgenden anhand eines Ausführungsbeispiels näher erläutert und beschrieben. Dabei zeigt:
- Fig. 1: eine prinzipielle Anordnung zur Durchführung des neuen Verfahrens,
- Fig. 2: eine Ansteuerung der Aktuatoren bei einem Versuchsaufbau mit der Anordnung gemäß Fig. 1 und
- Fig. 3: die Beschleunigung einer der beiden Walzen des Versuchsaufbaus mit der Anordnung gemäß Fig. 1 aufgrund der Ansteuerung der Aktuatoren gemäß Fig. 2.

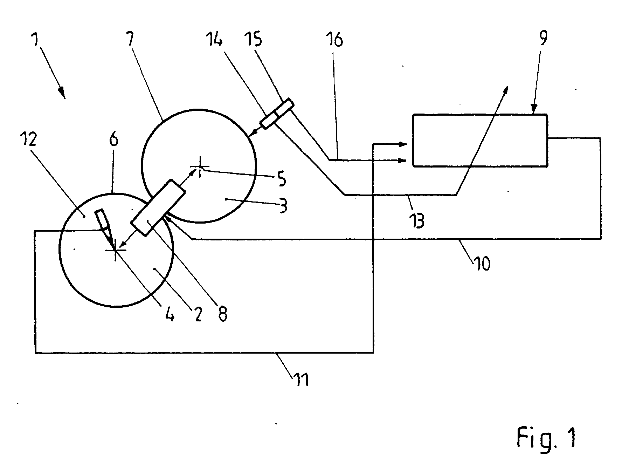

Die in Fig. 1 dargestellte Walzenanordnung 1 weist eine erste Walze 2 und eine zweite Walze 3 auf, die parallel zueinander ausgerichtet sind und direkt oder indirekt aneinander anliegen. Der Fall des direkten Anliegens ist beispielsweise dann gegeben, wenn die Walze 3 eine Stützwalze für die Walze 2 ist. Der Fall des indirekten Aneinanderliegens ist beispielsweise dann gegeben, wenn die Walzen 2 und 3 die Walzen eines Papierstreichapparats sind, zwischen denen eine Papierbahn hindurchgeführt wird. Die Walzen 2 und 3 laufen gegensinnig um ihre Drehachsen 4 und 5 um. Dabei kann es beispielsweise durch Unwuchten und Unrundheiten zu Kontaktschwingungen kommen. Die Kontaktschwingungen der Walzen 2 und 3 weisen besonders große Amplituden auf, wenn durch die erzwungenen Kontaktsschwingungen irgendeine sich auf die Walzen 2 und 3 auswirkende Resonanz angeregt wird. Hierbei handelt es sich typischerweise um eine höhere Harmonische der Drehfrequenz einer der beiden Walzen 2 oder 3. Im vorliegenden Fall soll gelten, daß die Oberfläche 6 der Walze 2 durch die Kontaktschwingungen eine zunehmende periodische Verformung erleidet, wobei die Periode der Verformung dem angesprochenen Vielfachen ihrer Drehfrequenz entspricht. Die Oberfläche 7 der Walze 3 ist demgegenüber von Verformungen ihrer Oberfläche aufgrund der Kontaktschwingungen weit weniger oder überhaupt nicht betroffen, wobei die Oberflächen 6 und 7 dennoch aus demselben Material ausgebildet sein können. Um die Kontaktschwingungen der Walzen 2 und 3 zu unterdrücken, sind zwischen den endseitigen, aber hier nicht selbst dargestellten Lagern an den Walzen 2 und 3 Aktuatoren 8 angeordnet, mit denen Ausgleichskräfte für die Kontaktschwingungen aufbringbar sind. Die Aktuatoren 8 werden von einer Steuereinrichtung 9 über ein Ansteuersignal 10 angesteuert. Die Ansteuerung erfolgt in Abhängigkeit von einem Drehzahlsignal 11 eines Drehzahlsensors 12 und in Abhängigkeit von einem Wegsignal 13 eines Abstandssensors 14. Der Drehzahlsensor 12 erfaßt die Drehfrequenz der Walze 2 mit der sich potentiell verformenden Oberfläche 6. Hieraus bestimmt die Steuereinrichtung 9 die Frequenzen, mit denen die Aktuatoren 8 angesteuert werden. Hierbei handelt es sich um ein oder mehrere ganzzahlige Vielfache der Drehfrequenz einschließlich der Drehfrequenz selbst. Insbesondere handelt es sich um die Frequenz, die der potentiellen periodischen Verformung der Oberfläche 6 der Walze 2 entspricht. Unter Verwendung der aus dem Drehzahlsignal 11 festgelegten Frequenzen erzeugt die Steuerung 9 ein Ansteuersignal, das für jede der Frequenzen einen sinusförmigen Anteil aufweist. Die Phase und die Amplitude dieses Ansteuersignals werden mit der Steuereinrichtung 9 in Abhängigkeit von dem Wegsignal 13 des Abstandssensors 14 festgelegt. Der Abstandssensor 14 erfaßt etwa im Bereich der Walzenmitte der Walze 3 auf der der Walze 2 abgekehrten Seite der Walze 3 die Bewegungen der Walze 3 aufgrund der Kontaktschwingungen. Wenn diese Bewegungen durch die Ausgleichskräfte der Aktuatoren 8 kompensiert werden, werden alle negativen Auswirkungen der Kontaktschwingungen unabhängig von ihrer Erregung beseitigt. Da es geradezu unmöglich ist, den Abstandssensor 14 ruhend gegenüber einem Inertialsystem anzuordnen, ist dem Abstandssensor 14 ein Korrektursensor 15 zugeordnet, der ein Korrektursignal 16 an die Steuereinrichtung 9 abgibt. Basierend auf einer Beschleunigungsmessung bietet der Korrektursensor 15 die Möglichkeit, die Eigenbewegungen des Sensors von dem Wegsignal 13 abzuziehen, um die reine Bewegung der Walze 3 gegenüber dem Inertialsystem zu extrahieren. Die Anzahl der Frequenzen, mit denen die Steuereinrichtung 9 die Aktuatoren 8 ansteuert, bei denen es sich jeweils um ein ganzzahliges Vielfaches der Drehfrequenz der Walze 2 handelt, beträgt typischerweise 1 bis 5, je nach dem, wie breit der Bereich der Resonanz ist. Wenn beispielsweise drei ganzzahlige Vielfache der Drehfrequenz in den Kernbereich dieser Resonanz fallen, erfolgt die Ansteuerung des Aktuators mit drei unterschiedlichen Frequenzen. Durch die Ausgleichskräfte der Aktuatoren 8 ist es möglich, das Auftreten sogenannter Rattermarken an der zur Verformung ihrer Oberfläche 6 neigenden Walze 2 zu verhindern, wenn diese eine harte Oberfläche aufweist, oder das Auftreten von elastischen, aber sich während des Betriebs der Walzenanordnung 1 nicht zurückstellenden Verformungen der Oberfläche 6 zu verhindern, wenn diese weich, d. h. beispielsweise aus einem Elastomerwerkstoff ausgebildet ist. Dieser Fall tritt beispielsweise bei Druckmaschinen oder auch bei Papierbeschichtungsmaschinen auf.

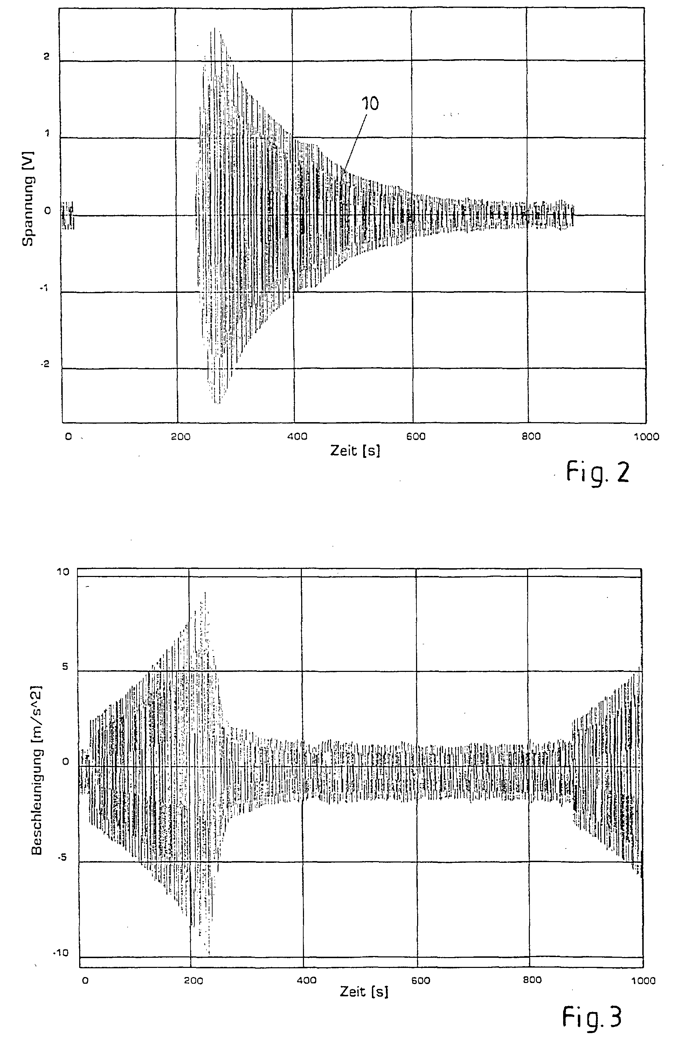

Der den Fig. 2 und 3 zugehörige Versuchsaufbau entspricht der Anordnung gemäß Fig. 1, wobei die Oberfläche 6 der Walze 2 aus einem Elastomerwerkstoff ausgebildet ist. Fig. 2 zeigt die Spannung des Ansteuersignals 10 für die Aktuatoren 8, bei denen es sich um Linearmotoren handelt. Fig. 3 zeigt die bei dem Ansteuersignal 10 gemäß Fig. 2 aus dem Wegsignal 13 und dem Korrektursignal 16 ermittelten Beschleunigungen der Oberfläche 7 der Walze 3 in der von den beiden Drehachsen 4 und 5 festgelegten Ebene. Das Ansteuersignal 10 führt die Beschleunigungen der Walze 3 sehr schnell auf einen unschädlichen Rest zurück. Das Ansteuersignal 10 wird dabei immer kleiner, wobei die Abnahme des Ansteuersignals 10 mit der Rückformung der elastischen Oberfläche 6 der Walze 2 in eine Rundform einhergeht. Sobald das Ansteuersignal 10 ausgeschaltet wird, wachsen die Beschleunigungen der Walze 3 sofort wieder an. Gleichzeitig wird eine zunehmende periodische Verformung der Oberfläche 6 beobachtet, die ihrerseits in Form einer Rückkopplung die Kontaktschwingungen vergrößert.

### BEZUGSZEICHENLISTE

- 1 -: Walzenanordnung
- 2 -: Walze
- 3 -: Walze
- 4 -: Drehachse
- 5 -: Drehachse
- 6 -: Oberfläche
- 7 -: Oberfläche
- 8 -: Aktuator
- 9 -: Steuereinrichtung
- 10 -: Ansteuersignal

- 11 -: Drehzahlsignal
- 12 -: Drehzahlsensor
- 13 -: Wegsignal
- 14 -: Abstandssensor
- 15 -: Korrektursensor
- 16 -: Korrektursignal

## Patentansprüche

1. Verfahren zum aktiven Unterdrücken von Kontaktschwingungen an Walzenanordnungen, insbesondere an Papierstreichapparaten, mit zwei parallel ausgerichteten, direkt oder indirekt aneinander anliegenden Walzen, von denen insbesondere eine ohne aktives Unterdrücken der Kontaktschwingungen eine zunehmende periodische Verformung ihrer Oberfläche zeigt, wobei Kräfte auf mindestens eine, Beschleunigungen mindestens einer und/oder Bewegungen mindestens einer der beiden Walzen gemessen werden und wobei Ausgleichskräfte in Abhängigkeit von den gemessenen Kräften, Beschleunigungen und/oder Bewegungen aufgebracht werden, **dadurch gekennzeichnet, daß** die Drehfrequenz der Walze (2) mit der sich potentiell insbesondere verformenden Oberfläche (6) bestimmt wird und daß die Ausgleichskräfte mit der Drehfrequenz und/oder mindestens einem aus der Drehfrequenz generierten ganzzahligen Vielfachen der Drehfrequenz zwischen den beiden Walzen (2 und 3) aufgebracht werden.

2. Verfahren nach Anspruch 1, **dadurch gekennzeichnet, daß** in einer der Walze (2) mit der sich potentiell insbesondere verformenden Oberfläche (6) abgekehrten Richtung die Kräfte auf, die Beschleunigungen der und/oder die Bewegungen der anderen Walze (3) gemessen werden.

3. Verfahren nach Anspruch 1 oder 2, **dadurch gekennzeichnet, daß** die Beschleunigungen und/oder Bewegungen der jeweiligen Walze (2 oder 3) in der Walzenmitte gemessen werden.

4. Verfahren nach einem der Ansprüche 1 bis 3, **dadurch gekennzeichnet, daß** die Kräfte auf, die Beschleunigungen der und/oder die Bewegungen der jeweiligen Walze (2 oder 3) für die Festlegung der Ausgleichskräfte nur in einem Frequenzband um die Frequenz der potentiellen periodischen Verformung der Walze (2) mit der sich potentiell insbesondere verformenden Oberfläche (6) betrachtet werden.

5. Verfahren nach einem der Ansprüche 1 bis 4, **dadurch gekennzeichnet, daß** die Ausgleichskräfte mit 1 bis 5, insbesondere 1, 3 oder 5, verschiedenen ganzzahligen Vielfachen der Drehfrequenz aufgebracht werden, die in einem Frequenzband um die Frequenz der potentiellen periodischen Verformung der Walze (2) mit der sich potentiell insbesondere verformenden Oberfläche (6) liegen.

6. Verfahren nach einem der Ansprüche 1 bis 5, **dadurch gekennzeichnet, daß** die Ausgleichskräfte senkrecht zu dem Anlagebereich der beiden Walzen (2 und 3) aufgebracht werden.

7. Verfahren nach einem der Ansprüche 1 bis 6, **dadurch gekennzeichnet, daß** die Kräfte auf, die Beschleunigungen der und/oder die Bewegungen der jeweiligen Walze (2 oder 3) für die Festlegung der Ausgleichskräfte in mehreren, in Längsrichtung der Walze (2 bzw. 3) untereinander beabstandeten Punkten gemessen werden und daß in Abhängigkeit davon in mehreren in Längsrichtung der Walzen (2 und 3) untereinander beabstandeten Bereichen separat festgelegte Ausgleichskräfte aufgebracht werden.

8. Vorrichtung zur Durchführung des Verfahrens nach einem der Ansprüche 1 bis 7 mit einer Walzenanordnungen, die zwei parallel ausgerichtete, direkt oder indirekt aneinander anliegende Walzen aufweist, von denen insbesondere eine ohne aktives Unterdrücken der Kontaktschwingungen eine zunehmende periodische Verformung ihrer Oberfläche zeigt, wobei für Kräfte auf mindestens eine, Beschleunigungen mindestens einer und/oder Bewegungen mindestens einer der beiden Walzen mindestens ein Sensor vorgesehen ist und wobei für das Aufbringen von Ausgleichskräften mindestens ein Aktuator vorgesehen ist, den eine Steuereinrichtung in Abhängigkeit von den gemessenen Kräften, Beschleunigungen und/oder Bewegungen angesteuert, **dadurch gekennzeichnet, daß** für die Walze (2) mit der sich potentiell insbesondere verformenden Oberfläche (6) ein Drehzahlsensor (12) vorgesehen ist, der die Drehfrequenz der Walze (2) mißt, und daß die Steuereinrichtung (9) jeden Aktuator (8) mit der Drehfrequenz und/oder mindestens einem aus der Drehfrequenz generierten ganzzahligen Vielfachen der Drehfrequenz ansteuert.

9. Vorrichtung nach Anspruch 8, **dadurch gekennzeichnet, daß** ein Sensor für die Beschleunigungen und/oder Bewegungen der jeweiligen Walze (2 oder 3) über der Oberfläche (6 bzw. 7) der Walze, insbesondere in der Walzenmitte, angeordnet ist, wobei der Sensor ein Abstandssensor (14), vorzugsweise ein kapazitiver Abstandssensor ist, dem ein Korrektursensor (15) für die Eigenbeschleunigungen bzw. Eigenbewegungen des Sensors zugeordnet ist.

10. Vorrichtung nach Anspruch 9, **dadurch gekennzeichnet, daß** die Lager der beiden Walzen (2 und 3) um eine Schwenkachse auseinanderschwenkbar sind und daß der oder die Aktuatoren (8) tangential zu der Schwenkachse (21) angeordnet sind.

## Claims

1. Method for actively suppressing contact vibrations in roll arrangements, particularly in paper coating apparatus, having two rolls which are arranged in parallel and in direct or in indirect contact, and particularly one of which, without actively suppressing the contact vibrations, showing a periodical deformation of its surface, the method comprising the steps of measuring forces onto at least one, accelerations of at least one and/or movements of at least one of the rolls, and of applying compensating forces in dependency of the measured forces, accelerations and/or movements, **characterized in that** the rotational frequency of the roll (2) having the potentially particularly deforming surface (6) is determined and that the compensating forces are applied between the two rolls (2) and (3) with the rotational frequency and/or at least one integer multiple of the rotational frequency being derived from the rotational frequency.

2. Method according to claim 1, **characterized in that** the forces onto, the accelerations of and/or the movements of the other roll (3) are measured in a direction opposite to the roll (2) having the potentially particularly deforming surface (6).

3. Method according to claim 1 and 2, **characterized in that** the accelerations and/or movements of the respective roll (2 or 3) are measured in the middle of the roll.

4. Method according to any of the claims 1 to 3, **characterized in that** the forces onto, the accelerations of and/or the movements of the respective roll (2 or 3) are only regarded in a frequency range around the frequency of the potential periodical deformation of the roll (2) having the potentially particularly forming surface (6) for determining the compensation forces.

5. Method according to any of the claims 1 to 4, **characterized in that** the compensation forces are applied with 1 to 5, particularly 1, 3 or 5, different integer multiples of the rotational frequency, which are in a frequency band around the frequency of the potential periodical deformation of the roll (2) having the potentially particularly deforming surface (6).

6. Method according to any of the claims 1 to 5, **characterized in that** the compensation forces are applied in a direction perpendicular to the contact area of the two rolls (2 and 3).

7. Method according to any of the claims 1 to 6, **characterized in that** the forces onto, the accelerations of and/or the movements of the respective roll (2 or 3) are measured in several points spaced apart from each other in a longitudinal direction of the roll (2 or 3), and that separately determined compensation forces depending thereof are applied in several areas spaced apart from each other in the longitudinal direction of the rolls (2 and 3).

8. Device for carrying out the method according to any of the claims 1 to 7, comprising a roll arrangement having two rolls which are arranged in parallel and in direct or indirect contact, and particularly one of which, without actively suppressing the contact vibrations, showing the increasing periodical deformation of its surface, at least one sensor being provided for forces onto at least one, accelerations of at least one and/or movements of at least one of the rolls, and at least one actuator being provided for applying compensation forces, the actuator being controlled by a control unit in dependency of the measured forces, accelerations and/or movements, **characterized in that** a rotational speed sensor (12) is provided for the roll (2) having the potentially particularly deforming surface (6), the rotational frequency sensor (12) measuring the rotational frequency of the roll (2), and that the control unit (9) controls each actuator (8) with the rotational frequency and/or at least one integer multiple of the rotational frequency derived from the rotational frequency.

9. Device according to claim 8, **characterized in that** a sensor for the accelerations and/or movements of the respective roll (2 or 3) is arranged above the surface (6 or 7) of the roll, particularly in the middle of the roll, the sensor being a distance sensor (14), particularly a capacitance distance sensor, to which a correction sensor (15) for the accelerations or movements of the sensor itself is associated.

10. Device according to claim 9, **characterized in that** the bearings of the two rolls (2 and 3) may be tilted away from each other about a tilting axis and that the actuator(s) (8) are arranged tangentially with regard to the tilting axis (21).

## Revendications

1. Procédé pour la suppression active de vibrations de contact dans des structures à rouleaux, en particulier dans des appareils à enduire le papier, avec deux rouleaux orientés parallèlement, directement ou indirectement adjacents l'un à l'autre, dont un en particulier présente une déformation progressive périodique de sa surface sans suppression active des vibrations de contact, les forces sur au moins un des deux rouleaux, les accélérations d'au moins un des deux rouleaux et/ou les déplacements d'au moins un des deux rouleaux étant mesurés et des forces de compensation étant introduites en dépendance des forces, des accélérations et/ou des déplacements mesurés,
**caractérisé en ce que** la fréquence de rotation des rouleaux (2) est déterminée par la surface (6) en particulier se déformant potentiellement et que les forces de compensation sont introduites entre les deux rouleaux (2 et 3) par la fréquence de rotation et/ou au moins un multiple entier de la fréquence de rotation généré à partir de la fréquence de rotation.

2. Procédé selon la revendication 1,
**caractérisé en ce que**, dans l'un des rouleaux (2), dans la direction opposée, par la surface (6) en particulier se déformant potentiellement, les forces sur l'autre rouleau (3), les accélérations de l'autre rouleau (3) et/ou les déplacements de l'autre rouleau (3) sont mesurés.

3. Procédé selon la revendication 1 ou 2,
**caractérisé en ce que** les accélérations et/ou les déplacements du rouleau (2 ou 3) respectif sont mesurés au milieu du rouleau.

4. Procédé selon l'une des revendications 1 à 3,
**caractérisé en ce que** les forces sur le rouleau (2 ou 3) respectif, les accélérations du rouleau (2 ou 3) respectif et/ou les déplacements du rouleau (2 ou 3) respectif sont pris en considération, pour la détermination des forces de compensation, seulement dans une bande de fréquences autour de la fréquence de la déformation périodique potentielle du rouleau (2) ayant la surface (6) en particulier se déformant potentiellement.

5. Procédé selon l'une des revendications 1 à 4,
**caractérisé en ce que** les forces de compensation sont introduite par 1 à 5, en particulier 1, 3 ou 5, multiples entiers différents de la fréquence de rotation qui se trouvent dans une bande de fréquences autour de la fréquence de la déformation périodique potentielle du rouleau (2) ayant la surface (6) en particulier se déformant potentiellement.

6. Procédé selon l'une des revendications 1 à 5,
**caractérisé en ce que** les forces de compensation sont introduites perpendiculairement à la zone d'appui des deux rouleaux (2 et 3).

7. Procédé selon l'une des revendications 1 à 6,
**caractérisé en ce que** les forces sur le rouleau (2 ou 3) respectif, les accélérations du rouleau (2 ou 3) respectif et/ou les déplacements du rouleau (2 ou 3) respectif sont mesurés, pour la détermination des forces de compensation, à plusieurs points écartés les uns des autres dans la direction longitudinale du rouleau (2 ou respectivement 3) et que des forces de compensation déterminées séparément sont envoyées, en dépendance de ceci, dans plusieurs zones séparées les unes des autres en direction longitudinale des rouleaux (2 et 3).

8. Dispositif pour la mise en oeuvre du procédé selon l'une des revendications 1 à 7, avec une structure à rouleaux qui présente deux rouleaux orientés parallèlement, directement ou indirectement adjacents l'un à l'autre, dont un en particulier présente une déformation progressive périodique de sa surface sans suppression active des vibrations de contact, au moins un capteur étant prévu pour les forces sur au moins un des deux rouleaux, les accélérations d'au moins un des deux rouleaux et/ou les déplacements d'au moins un des deux rouleaux et au moins un actionneur étant prévu pour l'introduction de forces de compensation, qui excite un dispositif de commande en dépendance des forces, des accélérations et/ou des déplacements mesurés,
**caractérisé en ce que**, pour le rouleau (2) avec la surface (6) en particulier se déformant potentiellement, est prévu un capteur de vitesse de rotation (12) qui mesure la fréquence de rotation du rouleau (2) et que le dispositif de commande (9) commande chaque actionneur par la fréquence de rotation et/ou au moins un multiple entier de la fréquence de rotation généré à partir de la fréquence de rotation.

9. Dispositif selon la revendication 8,
**caractérisé en ce qu'**un capteur pour les accélérations et/ou les déplacements du rouleau (2 ou 3) respectif est disposé au-dessus de la surface (6 ou respectivement (7) du rouleau, en particulier au milieu du rouleau, le capteur étant un capteur d'écartement (14), de préférence un capteur d'écartement capacitif, auquel est adjoint un capteur de correction (15) pour les accélérations propres ou respectivement les déplacements propres du capteur.

10. Dispositif selon la revendication 9,
**caractérisé en ce que** les paliers des deux rouleaux (2 et 3) peuvent pivoter l'un séparément de l'autre autour d'un axe de pivotement et que le ou les actionneurs (8) sont disposés tangentiellement à l'axe de pivotement (21).
